# EUROPÄISCHE PATENTSCHRIFT

(11) **EP 2 829 334 B1**
(45) Veröffentlichungstag und Bekanntmachung des Hinweises auf die Patenterteilung: **30.12.2015**
(21) Anmeldenummer: 13178003.3
(22) Anmeldetag: 25.07.2013
(51) Int. Cl.: B21D 28/26, B21D 43/11, B23Q 5/38, B23Q 5/56

(54) **Antriebsvorrichtung für eine Bewegungseinheit einer Werkzeugmaschine sowie Werkzeugmaschine mit einer derartigen Antriebsvorrichtung**
Drive device for a motion unit of a machine tool and machine tool with such a drive device
Dispositif d'entraînement pour une unité mobile d'une machine-outil et machine-outil dotée d'un tel dispositif d'entraînement

(43) Veröffentlichungstag der Anmeldung: 28.01.2015
(73) Patentinhaber: TRUMPF Werkzeugmaschinen GmbH + Co. KG, 71254 Ditzingen (DE)
(72) Erfinder: Sattler, Martin, 71229 Leonberg (DE); Hilgermann, Jan Lukas, 70378 Stuttgart (DE)
(74) Vertreter: Kohler Schmid Möbus Patentanwälte

(56) Entgegenhaltungen:
- EP-A1- 0 585 576
- DE-A1- 2 805 532
- FR-A1- 2 622 945
- US-A- 4 555 853
- "DREHANTRIEB MIT NADELLAGERN ABSTUETZEN", WERKSTATT UND BETRIEB, CARL HANSER VERLAG GMBH & CO. KG, DE, Bd. 124, Nr. 2, 1. Februar 1991 (1991-02-01), Seite 130, XP000319324, ISSN: 0043-2792

## Beschreibung

Die Erfindung betrifft eine Antriebsvorrichtung für eine an einem Maschinengestell einer Werkzeugmaschine bewegte Bewegungseinheit der Werkzeugmaschine, mit einem durch einen Antriebsmotor angetriebenen Verzahnungselement in Form eines mit einer Verzahnung versehenen Antriebsritzels sowie mit einem Verzahnungselement in Form einer mit einer Verzahnung versehenen Zahnstange, wobei
- von den beiden Verzahnungselementen das eine Verzahnungselement an das Maschinengestell und das andere Verzahnungselement an die Bewegungseinheit anbindbar ist,
- die beiden Verzahnungselemente mittels des Antriebsmotors relativ zueinander längs einer Bewegungsachse bewegt werden, indem die Verzahnungen der beiden Verzahnungselemente miteinander kämmen und dabei längs einer Eingriffsachse ineinander greifen, die senkrecht zu der Bewegungsachse der Verzahnungselemente verläuft,
- die beiden Verzahnungselemente parallel zu der Eingriffsachse elastisch aneinander abgestützt sind, indem wenigstens eines der beiden Verzahnungselemente ein elastisches Verzahnungselement bildet, das mittels einer Lagerungseinrichtung an einem Anbindungselement, über welches das elastische Verzahnungselement an das Maschinengestell oder an die Bewegungseinheit anbindbar ist, derart gelagert ist, dass das elastische Verzahnungselement unter der Wirkung einer von dem anderen Verzahnungselement auf das elastische Verzahnungselement parallel zu der Eingriffsachse ausgeübten Auslenkkraft und gegen die Wirkung einer der Auslenkkraft entgegengerichteten Rückstellkraft relativ zu dem Anbindungselement parallel zu der Eingriffsachse auslenkbar ist,
- die Wirkungslinie der Auslenkkraft gegenüber der zur Lagerung des elastischen Verzahnungselementes an dem zugeordneten Anbindungselement vorgesehenen Lagerungseinrichtung senkrecht zu einer Ebene versetzt ist, die von der Bewegungsachse der Verzahnungselemente und der Eingriffsachse aufgespannt wird und
- für das elastische Verzahnungselement zusätzlich zu der Lagerungseinrichtung eine Momentenstütze vorgesehen ist, welche einer aufgrund der Auslenkkraft ausgeführten Auslenk-Drehbewegung des elastischen Verzahnungselementes um eine parallel zu der Bewegungsachse der Verzahnungselemente verlaufende Drehachse entgegenwirkt.

Die Erfindung betrifft des Weiteren eine Werkzeugmaschine mit einer Antriebsvorrichtung der vorstehenden Art.

Mit einer gattungsgemäßen Antriebsvorrichtung ist eine Stanz-/Kombimaschine ausgerüstet, die von der Firma TRUMPF, 71254 Ditzingen, Deutschland unter der Typenbezeichnung TruMatic3000 vertrieben wird. Im Falle des Standes der Technik wird an einem C-förmigen Maschinengestell ein als Auflage für zu bearbeitende Bleche dienender Maschinentisch mittels eines Zahnstangenantriebs längs eines unteren Gestellschenkels des Maschinengestells bewegt. Die Zahnstange des Zahnstangenantriebs ist an dem Maschinentisch vorgesehen und bewegt sich gemeinsam mit diesem. Das mit der Zahnstange kämmende Antriebsritzel ist stationär an dem Maschinengestell gelagert. Das Antriebsritzel ist in Richtung auf die Zahnstange vorgespannt und kann in Richtung des Eingriffs der Verzahnungen von Zahnstange und Antriebsritzel Ausgleichsbewegungen ausführen, wie sie beispielsweise aufgrund von Fertigungs- und Montagetoleranzen und/oder aufgrund von Wärmedehnung an dem Zahnstangenantrieb notwendig sein können. Die Vorspannung des Antriebsritzels wird mit Hilfe von vorgespannten Federpaketen realisiert, welche das Antriebsritzel an der von der Zahnstange abliegenden Seite beaufschlagen. Um zu verhindern, dass das Antriebsritzel bei Ausgleichsbewegungen gegenüber der Zahnstange um eine parallel zu der Achse der Zahnstangenbewegung verlaufende Drehachse kippt, wird das Antriebsritzel mittels Linearführungen in Richtung der Ausgleichsbewegungen zwangsgeführt. Durch unerwünschte Kippbewegungen des Antriebsritzels würde der gegenseitige Eingriff der Verzahnungen der Zahnstange und des Antriebsritzels in Mitleidenschaft gezogen. Es käme zu einer irregulären Schrägstellung der Verzahnung des Antriebsritzels gegenüber der Verzahnung der Zahnstange und damit verbunden zu einer Beeinträchtigung der Kraftübertragung zwischen dem Antriebsritzel und der Zahnstange sowie zu einem erhöhten Verschleiß an den miteinander kämmenden Verzahnungen.

Den gattungsgemäßen Stand der Technik dahingehend weiterzubilden, dass unerwünschte Kippbewegungen an den miteinander im Eingriff befindlichen Verzahnungen mit einem gegenüber den bekannten Lösungen verminderten Aufwand funktionssicher vermieden werden, ist Aufgabe der vorliegenden Erfindung.

Erfindungsgemäß gelöst wird diese Aufgabe durch die Antriebsvorrichtung nach Patentanspruch 1 und durch die mit einer derartigen Antriebsvorrichtung versehene Werkzeugmaschine nach Patentanspruch 10.

Im Falle der Erfindung wird einem Verkippen des mit einer Auslenkkraft beaufschlagten elastischen Verzahnungselementes durch einen Lenker entgegengewirkt, der bestrebt ist, das elastische Verzahnungselement als Reaktion auf die Auslenkkraft zu einer Reaktions-Drehbewegung zu zwingen, durch welche die von der Auslenkkraft bewirkte Neigung des elastischen Verzahnungselementes zur Ausführung einer Kippbewegung zumindest größtenteils kompensiert wird. Dementsprechend stabilisiert der erfindungsgemäße Lenker unter der Wirkung der auf das elastische Verzahnungselement ausgeübten Auslenkkraft die Soll-Ausrichtung des elastischen Verzahnungselementes um eine parallel zu der Bewegungsachse der Verzahnungselemente verlaufende Drehachse. Infolgedessen behält die Verzahnung des elastischen Verzahnungselementes Ihre Soll-Ausrichtung gegenüber der Verzahnung des dem elastischen Verzahnungselement zugeordneten Verzahnungselementes trotz der an dem elastischen Verzahnungselement angreifenden Auslenkkraft verkippungsfrei bei. Die Drehmomente, die von der Auslenkkraft einerseits am Ort der Krafteinleitung in das elastische Verzahnungselement und andererseits lenkerseitig erzeugt werden und die jeweils bestrebt sind, das elastische Verzahnungselement um eine parallel zu der Bewegungsachse der Verzahnungselemente verlaufende Drehachse zu drehen, sind einander entgegengerichtet und heben sich daher in ihrer Wirkung gegenseitig auf. Folglich bewegt sich das elastische Verzahnungselement unter der Wirkung der Auslenkkraft durch den Lenker geführt und verkippungsfrei in der Wirkrichtung der Auslenkkraft. Mit der Ausweichbewegung des elastischen Verzahnungselementes in Wirkrichtung der Auslenkkraft ist zwar aufgrund der Schwenkbewegung, welche der an das elastische Verzahnungselement angelenkte Lenker ausführt, eine Bewegung senkrecht zu der von der Bewegungsachse und der Eingriffsachse der Verzahnungselemente aufgespannten Ebene verbunden; der Betrag dieser Bewegung ist aber aufgrund des kleinen Schwenkwinkels des Lenkers und aufgrund einer entsprechende Konfiguration des Lenkers minimal und folglich unbeachtlich.

Bei dem erfindungsgemäßen Lenker handelt es sich vorteilhafterweise um ein konstruktiv einfaches, wartungsfreies und platzsparend unterzubringendes Bauteil, welches gleichwohl unerwünschte Kippbewegungen des elastischen Verzahnungselementes funktionssicher verhindert. Der Lenker ist auf Seiten des elastischen Verzahnungselementes um eine verzahnungselementseitige Schwenkachse und andererseits um eine verzahnungselementferne Schwenkachse schwenkbar angelenkt. Je nachdem ob das elastische Verzahnungselement an das Maschinengestell oder an die Bewegungseinheit der Werkzeugmaschine angebunden ist, befindet sich die verzahnungselementferne Schwenkachse des Lenkers auf Seiten des Maschinengestells oder auf Seiten der Bewegungseinheit. Verzahnungselementseitig kann der Lenker unmittelbar an dem elastischen Verzahnungselement angebracht sein. Alternativ besteht die Möglichkeit, den Lenker an einer Tragstruktur anzulenken, die ihrerseits das elastische Verzahnungselement lagert. Von der letztgenannten Möglichkeit wird insbesondere dann Gebrauch gemacht, wenn das elastische Verzahnungselement von dem Antriebsritzel der erfindungsgemäßen Antriebsvorrichtung gebildet wird, das an einer Tragstruktur drehbar gelagert ist. Als Zahnstange ist erfindungsgemäß in erster Linie eine Zahnstange im engeren Sinne, d.h. ein geradliniges Verzahnungselement, vorgesehen. Denkbar sind aber auch gekrümmte "Zahnstangen".

Besondere Ausführungsarten der Erfindung nach den unabhängigen Patentansprüchen 1 und 10 ergeben sich aus den abhängigen Patentansprüchen 2 bis 9.

Im Falle der Erfindungsbauart nach Patentanspruch 2 ist der Lenker der Momentenstütze für das elastische Verzahnungselement zwischen dem elastischen Verzahnungselement und dem Anbindungselement vorgesehen. Als verzahnungselementferne Schwenkachse des Lenkers ist folglich eine anbindungselementseitige Schwenkachse vorgesehen. Dementsprechend ist das elastische Verzahnungselement sowohl über die parallel zu der Eingriffsachse der miteinander kämmenden Verzahnungen elastische Lagerungseinrichtung als auch über den Lenker der Momentenstütze mit dem Anbindungselement gekoppelt. Damit bilden das elastische Verzahnungselement, dessen elastische Lagerungseinrichtung, der Lenker der Momentenstütze und das Anbindungselement eine kompakte Baueinheit, die vielfältige Funktionen in sich vereint.

In weiterer bevorzugter Ausgestaltung der Erfindung ist das elastische Verzahnungselement über den Lenker der Momentenstütze an dem Anbindungselement aufgehängt (Patentanspruch 3). In Schwerkraftrichtung wird der Lenker von dem elastischen Verzahnungselement folglich auf Zug beansprucht. Insoweit bedarf es eines Lenkers mit hinreichender Zugfestigkeit, während die Druckfestigkeit des Lenkers allenfalls von untergeordneter Bedeutung ist.

Gemäß Patentanspruch 4 wird der Lenker in bevorzugter Ausgestaltung der Erfindung von einem Blech, vorzugsweise von einem Federblech, gebildet. Die erfindungsgemäße Momentenstütze ist in diesem Fall mit einfachsten Mitteln realisiert. Zur schwenkbeweglichen Kopplung des Bleches mit dem elastischen Verzahnungselement einerseits und dem Maschinengestell, der Bewegungseinheit bzw. dem Anbindungselement andererseits kann diese Erfindungsbauart ohne klassische Gelenkverbindungen auskommen. Vielmehr können einfache Schweißverbindungen die verzahnungselementseitige und auch die verzahnungselementferne Schwenkachse ausbilden. Die Verwendung eines Blechs als Lenker der Momentenstütze für das elastische Verzahnungselement empfiehlt sich insbesondere dann, wenn das elastische Verzahnungselement über das Blech an dem Anbindungselement aufgehängt ist und das Blech im Wesentlichen nur Zugkräfte abtragen muss.

Die im Falle der Erfindung vorgesehene elastische Lagerung des elastischen Verzahnungselementes an dem Anbindungselement kann konstruktiv auf unterschiedliche Art und Weise ausgeführt sein. Ausweislich Patentanspruch 5 wird erfindungsgemäß als Lagerungseinrichtung für das elastische Verzahnungselement ein Festkörpergelenk bevorzugt. Dementsprechend sind der Träger der Verzahnung des elastischen Verzahnungselementes, etwa der mit der betreffenden Verzahnung versehene Grundkörper der Zahnstange oder eine Tragstruktur für das Antriebsritzel, einerseits und insbesondere das restliche Anbindungselement andererseits Bereiche ein und desselben Bauteils, die durch eine Zone verminderter Biegesteifigkeit miteinander verbunden und folglich in Richtung der Auslenkkraft und der dieser entgegengerichteten Rückstellkraft relativ zueinander beweglich sind. Festkörpergelenke der erfindungsgemäßen Art sind konstruktiv einfach gestaltet, annähernd wartungsfrei und kostengünstig realisierbar.

Durch eine besonders platz- und gewichtssparende Bauweise zeichnet sich die Erfindungsbauart gemäß Patentanspruch 6 aus, im Falle derer das dem elastischen Verzahnungselement zugeordnete Anbindungselement einen portalartigen Rahmen aufweist und der Lenker der Momentenstütze für das elastische Verzahnungselement zwischen den Portalschenkeln des portalartigen Rahmens angeordnet ist.

Dabei ist der Lenker der Momentenstütze für das elastische Verzahnungselement vorzugsweise an der Portalbrücke des portalartigen Rahmens schwenkbar angebracht (Patentanspruch 7). Insbesondere besteht die Möglichkeit, dass das elastische Verzahnungselement über den Lenker der Momentenstütze an der Portalbrücke des portalartigen Rahmens aufgehängt ist.

Die wenigstens teilweise Ausbildung des dem elastischen Verzahnungselement zugeordneten Anbindungselementes als portalartiger Rahmen eröffnet die Möglichkeit, zwischen den Portalschenkeln des portalartigen Rahmens auf einfache Art und Weise einen Zugang zu dem elastischen Verzahnungselement vorzusehen (Patentanspruch 8). Auf diese Art und Weise kann beispielsweise die Lagerungseinrichtung zur elastischen Lagerung des elastischen Verzahnungselementes an dem zugeordneten Anbindungselement zugänglich gemacht werden. Insbesondere ist es möglich, eine Vorspannung des elastischen Verzahnungselementes gegenüber dem anderen Verzahnungselement mittels geeigneter Hilfsmittel durch den an dem portalartigen Rahmen vorgesehenen Zugang hindurch einzustellen.

Durch besondere fertigungstechnische Vorteile und durch eine besonders leichte und dessen ungeachtet lastaufnahmefähige Bauweise zeichnet sich das dem elastischen Verzahnungselement zugeordnete Anbindungselement der Erfindungsbauart nach Patentanspruch 9 aus.

Nachfolgend wird die Erfindung anhand beispielhafter schematischer Darstellungen näher erläutert. Es zeigen:
- Figur 1: eine Stanz-Laser-Kombimaschine mit einem Maschinentisch und einem Zahnstangenantrieb für den Maschinentisch,
- Figur 2: den Zahnstangenantrieb gemäß Figur 1 in Einzeldarstellung,
- Figur 3: den Zahnstangenantrieb gemäß Figur 2 in der Ansicht in Richtung des Pfeils III in Figur 2,
- Figur 4: eine Darstellung zur Veranschaulichung der Funktionsweise des Zahnstangenantriebs gemäß den Figuren 1 bis 3 und
- Figur 5: eine besondere Bauart des Zahnstangenantriebs gemäß den Figuren 1 bis 3.

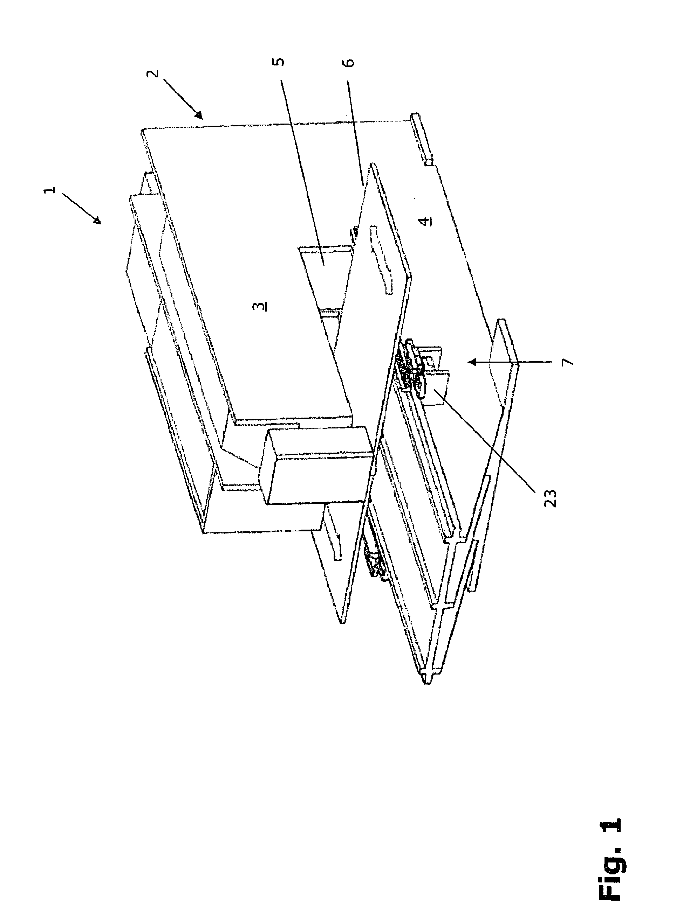

Ausweislich Figur 1 besitzt eine als Stanz-Laser-Kombimaschine ausgeführte Werkzeugmaschine 1 ein C-förmiges Maschinengestell 2 mit einem oberen Gestellschenkel 3 und einem unteren Gestellschenkel 4. Die Gestellschenkel 3, 4 begrenzen ihrerseits einen Rachenraum 5 des Maschinengestells 2. An dem unteren Gestellschenkel 4 ist als Bewegungseinheit der Werkzeugmaschine 1 ein Maschinentisch 6 gelagert. Nicht dargestellte Bleche, die an der Werkzeugmaschine 1 bearbeitet werden, ruhen auf dem Maschinentisch 6 und werden mittels einer gleichfalls nicht gezeigten Koordinatenführung herkömmlicher Bauart gegenüber den Bearbeitungseinrichtungen der Werkzeugmaschine 1 bewegt bzw. positioniert. Dabei verfährt der Maschinentisch 6 gemeinsam mit dem oder den darauf abgelegten Blechen längs des unteren Gestellschenkels 4.

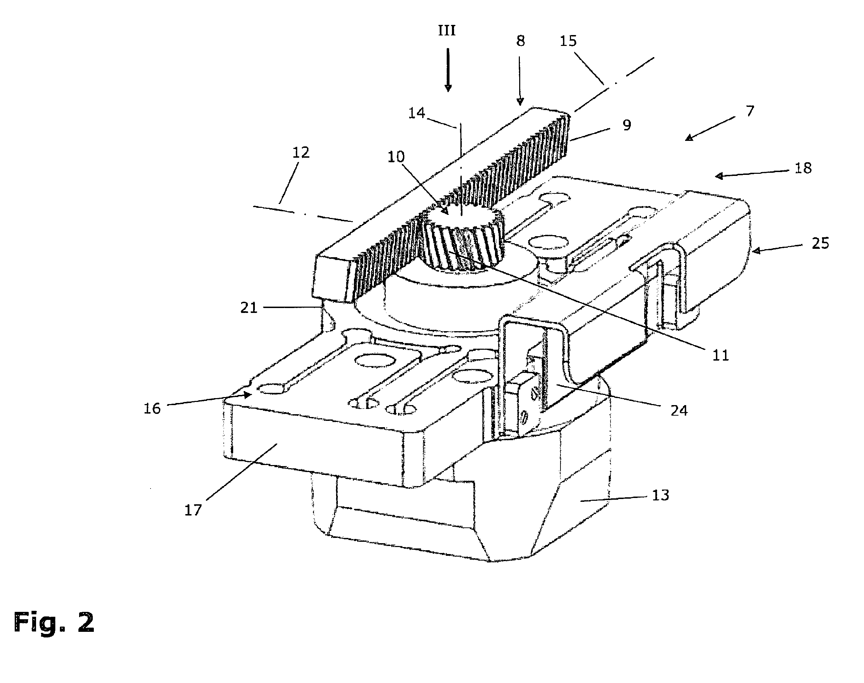

Die Bewegungen des Maschinentisches 6 werden mittels einer als Zahnstangenantrieb 7 ausgebildeten Antriebsvorrichtung erzeugt. Gemäß Figur 2 umfasst der Zahnstangenantrieb 7 in üblicher Weise als Verzahnungselemente eine Zahnstange 8 mit einer Verzahnung in Form einer Zahnstangenverzahnung 9 sowie ein Antriebsritzel 10 mit einer Verzahnung in Form einer Ritzelverzahnung 11. In dem dargestellten Beispielsfall sind die Zahnstangenverzahnung 9 und die Ritzelverzahnung 11 als Schrägverzahnungen ausgeführt. Die Zahnstangenverzahnung 9 und die Ritzelverzahnung 11 greifen längs einer in Figur 2 strichpunktiert angedeuteten Eingriffsachse 12 ineinander ein. Ein Antriebsmotor 13 des Zahnstangenantriebs 7 treibt das Antriebsritzel 10 um eine Ritzeldrehachse 14 an.

Die Zahnstange 8 ist an dem Maschinentisch 6 montiert und verfährt gemeinsam mit diesem. Das Antriebsritzel 10 und der Antriebsmotor 13 sind stationär an dem Maschinengestell 2, im Einzelnen an dem unteren Gestellschenkel 4, gelagert. Rotiert das von dem Antriebsmotor 13 angetriebene Antriebsritzel 10 um eine Ritzeldrehachse 14, so wird die Zahnstange 8 gemeinsam mit dem daran angebundenen Maschinentisch 6 längs einer Bewegungsachse 15 an dem unteren Gestellschenkel 4 des Maschinengestells 2 entlang bewegt.

Zur Gewährleistung eines spielfreien gegenseitigen Eingriffs der Zahnstangenverzahnung 9 und der Ritzelverzahnung 11 ist das Antriebsritzel 10 längs der Eingriffsachse 12 gegen die Zahnstange 8 elastisch vorgespannt. Zu diesem Zweck ist das Antriebsritzel 10 gemeinsam mit dem Antriebsmotor 13 über eine als Festkörpergelenk 16 ausgebildete Lagerungseinrichtung an einer Montageplatte 17 eines Anbindungselementes 18 gelagert, über welches das Antriebsritzel 10 an den unteren Gestellschenkel 4 des Maschinengestells 2 angebunden ist.

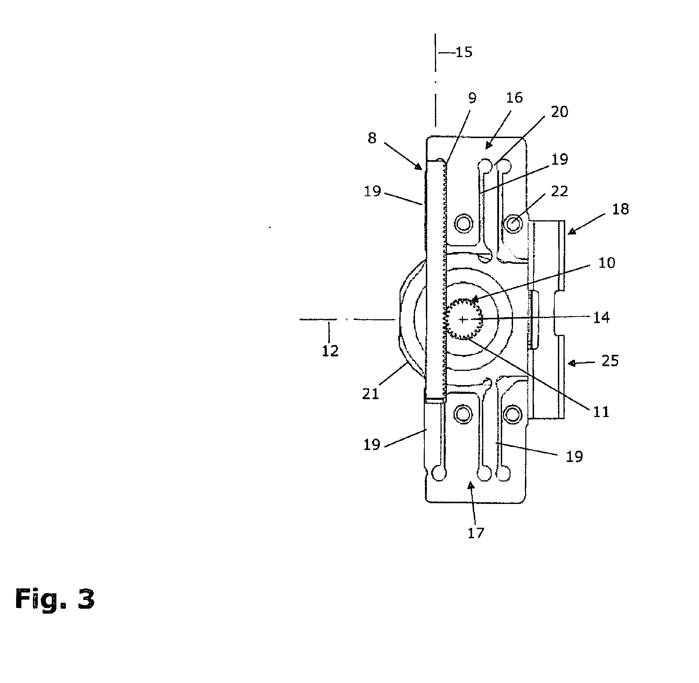

Wie insbesondere in Figur 3 zu erkennen ist, umfasst das Festkörpergelenk 16 insgesamt vier Gelenkarme 19, die jeweils über einen Bereich 20 verminderter Biegesteifigkeit einerseits mit einer als Tragstruktur für das Antriebsritzel 10 und den Antriebsmotor 13 dienenden Tragplatte 21 und andererseits mit der Montageplatte 17 des Anbindungselementes 18 materialeinheitlich verbunden sind. Das Festkörpergelenk 16 sorgt dafür, dass das Antriebsritzel 10 längs der Eingriffsachse 12 der Zahnstangenverzahnung 9 und der Ritzelverzahnung 11 gegen die Wirkung einer Rückstellkraft auslenkbar ist und folglich ein elastisches Verzahnungselement bildet. Wird die Montageplatte 17 an Befestigungsbohrungen 22 mit einer an dem unteren Gestellschenkel 4 des Maschinengestells 2 angebrachten Konsole 23 (Figur 1) mit entsprechendem Abstand von dem unteren Gestellschenkel 4 verschraubt, so ergibt sich die vorstehend erwähnte Vorspannung des Antriebsritzels 10 gegen die an dem Maschinentisch 6 angebrachte Zahnstange 8.

Zusätzlich zu dem Festkörpergelenk 16 stellt ein als Lenkerblech 24 ausgebildeter Lenker eine Verbindung zwischen dem Antriebsritzel 10 bzw. der mit diesem versehenen Tragplatte 21 einerseits und dem Anbindungselement 18 andererseits her. Als Lenkerblech 24 ist in dem dargestellten Beispielsfall ein Federblech vorgesehen, das an seinem in Figur 2 unteren Rand mit der Lagerplatte 21 und an seinem in Figur 2 oberen Rand mit dem Anbindungselement 18 verbunden, im vorliegenden Fall verschweißt ist. An dem Anbindungselement 18 ist das Lenkerblech 24 dabei an einem als Stanzbiegeteil gefertigten portalartigen Rahmen 25 befestigt.

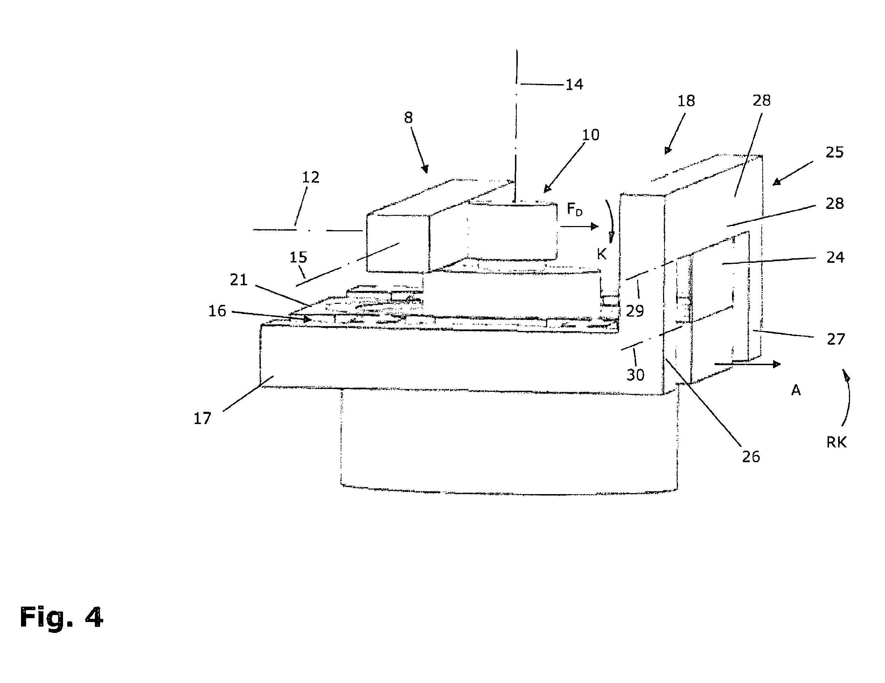

Wird mittels des von dem Antriebsmotor 13 angetriebenen und um die Ritzeldrehachse 14 rotierenden Antriebsritzels 10 die Zahnstange 8 mit dem daran angebundenen Maschinentisch 6 längs der Bewegungsachse 15 angetrieben, so ist es denkbar, dass insbesondere aufgrund fertigungs- oder montagebedingter Toleranzen von der Zahnstange 8 längs der Eingriffsachse 12 Kräfte auf das Antriebsritzel 10 ausgeübt werden. Die in diesem Fall an dem Zahnstangenantrieb 7 auftretenden Effekte werden anhand der stark schematischen Darstellung von Figur 4 erläutert.

Die Zahnstange 8 und das Antriebsritzel 10 sind in Figur 4 der Einfachheit halber ohne die Zahnstangenverzahnung 9 und die damit kämmende Ritzelverzahnung 11 gezeigt. Ebenfalls nicht im Einzelnen dargestellt sind die in Figur 2 erkennbaren Schraubverbindungen, über welche der portalartige Rahmen 25 an Portalschenkeln 26, 27 mit der Montageplatte 17 des Anbindungselementes 18 verbunden ist. An einer zwischen den Portalschenkeln 26, 27 verlaufenden Portalbrücke 28 des portalartigen Rahmens 25 ist die Tragplatte 21 über das Lenkerblech 24 aufgehängt.

Wird beispielsweise in Folge von Fertigungs- oder Montagetoleranzen von der sich längs der Bewegungsachse 15 bewegenden Zahnstange 8 auf das Antriebsritzel 10 eine Kraft F_{D} ausgeübt, so wirkt die Kraft F_{D} als Auslenkkraft, welche das Antriebsritzel 10 in Wirkrichtung der Kraft aus der in Figur 4 gezeigten Ausgangsposition auslenkt. Die Auslenkung des Antriebsritzels 10 erfolgt dabei gegen die Wirkung einer Rückstellkraft, die sich an dem zwischen der Tragplatte 21 und der Montageplatte 17 des Anbindungselementes 18 vorgesehenen Festkörpergelenk 16 aufbaut. Aufgrund des senkrecht zu der von der Eingriffsachse 12 und der Bewegungsachse 15 aufgespannten Ebene bestehenden Versatzes zwischen der Wirkungslinie der Auslenkkraft F_{D} und der mittels des Festkörpergelenks 16 bewirkten elastischen Lagerung des Antriebsritzels 10 an dem Anbindungselement 18 ist die Auslenkkraft F_{D} bestrebt, das Antriebsritzel 10 um das Festkörpergelenk 16 zu drehen und dadurch relativ zu der Zahnstange 8 zu kippen. Die Achse dieser angestrebten Auslenk-Drehbewegung verläuft parallel zu der Bewegungsachse 15. Die Drehrichtung ist durch einen Pfeil K veranschaulicht.

Zwar wirkt das Festkörpergelenk 16 einer derartigen Auslenk-Drehbewegung des Antriebsritzels 16 entgegen; aufgrund seiner Weichheit ist das Festkörpergefenk 16 aber nicht in der Lage, eine Auslenk-Drehbewegung des Antriebsritzels 10 gänzlich zu verhindern.

Die von dem Festkörpergelenk 16 zugelassene Auslenk-Drehbeweglichkeit des Antriebsritzels 10 wird mittels des Lenkerblechs 24 eliminiert.

Das Lenkerblech 24 ist mit seinem unteren Rand an der Tragplatte 21 und mit seinem oberen Rand an dem Anbindungselement 18, im Einzelnen an der Portalbrücke 28 des portalartigen Rahmens 25 des Anbindungselementes 18, befestigt.

Aufgrund der Beaufschlagung durch die Auslenkkraft F_{D} bewegt sich das Antriebsritzel 10 gemeinsam mit der Tragplatte 21 in Richtung eines Pfeils A in Figur 4. In Folge der Bewegung der Tragplatte 21 in Richtung des Pfeils A führt das Lenkerblech 24, über welches die Tragplatte 21 an dem Anbindungselement 18 aufgehängt ist, relativ zu dem Anbindungselement 18 eine Schwenkbewegung um eine verzahnungselementferne, vorliegend eine anbindungselementseitige, Schwenkachse 29 und relativ zu der Tragplatte 21 eine Schwenkbewegung um eine verzahnungselementseitige Schwenkachse 30 aus. Die verzahnungselementferne Schwenkachse 29 wird durch die Schweißverbindung des Lenkerblechs 24 mit dem portalartigen Rahmen 25 des Anbindungselementes 18, die verzahnungselementseitige Schwenkachse 30 durch die Schweißverbindung des Lenkerblechs 24 mit der Tragplatte 21 ausgebildet.

In Folge der als Reaktion auf die Auslenkkraft F_{D} ausgeführten Schwenkbewegung des Lenkerblechs 24 ist die an dem Lenkerblech 24 befestigte Tragplatte 21 bestrebt, sich gemeinsam mit dem Antriebsritzel 10 in einer durch einen Pfeil veranschaulichten Richtung RK mit einer Reaktions-Drehbewegung um das Festkörpergelenk 16 und dabei um eine parallel zu der Bewegungsachse 15 verlaufende Achse zu drehen. Nachdem aber die Drehrichtung K und die Drehrichtung RK einander entgegengerichtet sind, behalten im Ergebnis die Tragplatte 21 und damit auch das Antriebsritzel 10 ihre Ausrichtung ungeachtet der Auslenkkraft F_{D} und des von dieser an dem Antriebsritzel 10 erzeugten Drehmomentes bei. Eine unerwünschte Kippbewegung des Antriebsritzels 10 gegenüber der Zahnstange 8 wird somit verhindert.

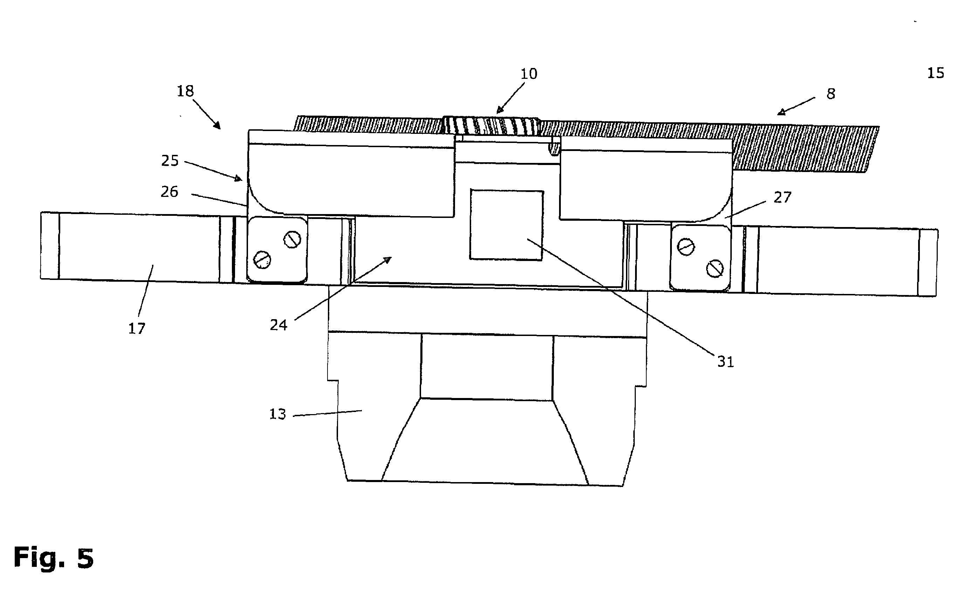

Die in Figur 5 dargestellte Anordnung unterscheidet sich von der Anordnung gemäß den Figuren 2 bis 4 lediglich dadurch, dass das Lenkerblech 24 zwischen den Portalschenkeln 26, 27 des portalartigen Rahmens 25 mit einem Fenster 31 versehen ist, das einen Zugang zu dem elastischen Verzahnungselement, insbesondere einen Zugang zu dem Festkörpergelenk 16 bildet. Durch das Fenster 31 hindurch kann beispielsweise die Position voreingestellt werden, welche die mit dem Antriebsritzel 10 versehene Tragplatte 21 vor der Montage des Zahnstangenantriebs 7 relativ zu dem Anbindungselement 18 einnimmt. Insbesondere ein entsprechender Einstellkeil kann durch das Fenster 31 hindurchgreifen.

## Patentansprüche

1. Antriebsvorrichtung für eine an einem Maschinengestell (2) einer Werkzeugmaschine (1) bewegte Bewegungseinheit (6) der Werkzeugmaschine (1), mit einem durch einen Antriebsmotor (13) angetriebenen Verzahnungselement in Form eines mit einer Verzahnung (11) versehenen Antriebsritzels (10) sowie mit einem Verzahnungselement in Form einer mit einer Verzahnung (9) versehenen Zahnstange (8), wobei
• von den beiden Verzahnungselementen das eine Verzahnungselement an das Maschinengestell (2) und das andere Verzahnungselement an die Bewegungseinheit (6) anbindbar ist,
• die beiden Verzahnungselemente mittels des Antriebsmotors (13) relativ zueinander längs einer Bewegungsachse (15) bewegt werden, indem die Verzahnungen (9, 11) der beiden Verzahnungselemente miteinander kämmen und dabei längs einer Eingriffsachse (12) ineinander greifen, die senkrecht zu der Bewegungsachse (15) der Verzahnungselemente verläuft,
• die beiden Verzahnungselemente parallel zu der Eingriffsachse (12) elastisch aneinander abgestützt sind, indem wenigstens eines der beiden Verzahnungselemente ein elastisches Verzahnungselement bildet, das mittels einer Lagerungseinrichtung (16) an einem Anbindungselement (18), über welches das elastische Verzahnungselement an das Maschinengestell (2) oder an die Bewegungseinheit (6) an anbindbar ist, derart gelagert ist, dass das elastische Verzahnungselement unter der Wirkung einer von dem anderen Verzahnungselement auf das elastische Verzahnungselement parallel zu der Eingriffsachse (12) ausgeübten Auslenkkraft (F_{D}) und gegen die Wirkung einer der Auslenkkraft (F_{D}) entgegengerichteten Rückstellkraft relativ zu dem Anbindungselement (18) parallel zu der Eingriffsachse (12) auslenkbar ist,
• die Wirkungslinie der Auslenkkraft (F_{D}) gegenüber der zur Lagerung des elastischen Verzahnungselementes an dem zugeordneten Anbindungselement (18) vorgesehenen Lagerungseinrichtung (16) senkrecht zu einer Ebene versetzt ist, die von der Bewegungsachse (15) der Verzahnungselemente und der Eingriffsachse (12) aufgespannt wird und
• für das elastische Verzahnungselement zusätzlich zu der Lagerungseinrichtung (16) eine Momentenstütze vorgesehen ist, welche einer aufgrund der Auslenkkraft (F_{D}) ausgeführten Auslenk-Drehbewegung des elastischen Verzahnungselementes um eine parallel zu der Bewegungsachse (15) der Verzahnungselemente verlaufende Drehachse entgegenwirkt,
**dadurch gekennzeichnet, dass**
die Momentenstütze für das elastische Verzahnungselement einen Lenker (24) aufweist,
• der auf Seiten des elastischen Verzahnungselementes um eine verzahnungselementseitige Schwenkachse (30) und auf Seiten des an das elastische Verzahnungselement anzubindenden Maschinengestells oder der an das elastische Verzahnungselement anzubindenden Bewegungseinheit um eine verzahnungselementferne Schwenkachse (29) schwenkbar angelenkt ist, wobei die verzahnungselementseitige Schwenkachse (30) und die verzahnungselementferne Schwenkachse (29) parallel zu der Drehachse des elastischen Verzahnungselementes verlaufen und
• der aufgrund einer Beaufschlagung des elastischen Verzahnungselementes mit einer Auslenkkraft (F_{D}) das elastische Verzahnungselement zur Ausführung einer Reaktions-Drehbewegung zwingt, welche der Auslenk-Drehbewegung des elastischen Verzahnungselementes entgegengerichtet ist.

2. Antriebsvorrichtung nach Anspruch 1, **dadurch gekennzeichnet, dass** der Lenker (24) der Momentenstütze für das elastische Verzahnungselement zwischen dem elastischen Verzahnungselement und dem zugeordneten Anbindungselement (18) vorgesehen ist und dass als verzahnungselementferne Schwenkachse (30) eine anbindungselementseitige Schwenkachse vorgesehen ist.

3. Antriebsvorrichtung nach Anspruch 2, **dadurch gekennzeichnet, dass** das elastische Verzahnungselement über den Lenker (24) an dem zugeordneten Anbindungselement (18) aufgehängt ist.

4. Antriebsvorrichtung nach einem der vorhergehenden Ansprüche, **dadurch gekennzeichnet, dass** der Lenker (24) von einem Blech, vorzugsweise von einem Federblech, gebildet ist, das einerseits um die verzahnungselementseitige Schwenkachse (30) und andererseits um die verzahnungselementferne Schwenkachse (29) schwenkbar ist.

5. Antriebsvorrichtung nach einem der vorhergehenden Ansprüche, **dadurch gekennzeichnet, dass** das elastische Verzahnungselement über eine Lagerungseinrichtung (16) in Form eines Festkörpergelenks an dem zugeordneten Anbindungselement (18) parallel zu der Eingriffsachse (12) gegen die Wirkung einer Rückstellkraft auslenkbar gelagert ist.

6. Antriebsvorrichtung nach einem der vorhergehenden Ansprüche, **dadurch gekennzeichnet, dass** das dem elastischen Verzahnungselement zugeordnete Anbindungselement (18) einen portalartigen Rahmen (25) mit zwei Portalschenkeln (26, 27) und einer die Portalschenkel (26, 27) miteinander verbindenden Portalbrücke (28) aufweist und dass der Lenker (24) der Momentenstütze für das elastische Verzahnungselement zwischen den Portalschenkeln (26, 27) des portalartigen Rahmens (25) angeordnet ist.

7. Antriebsvorrichtung nach Anspruch 6, **dadurch gekennzeichnet, dass** der Lenker (24) der Momentenstütze für das elastische Verzahnungselement anbindungselementseitig an der Portalbrücke (28) des portalartigen Rahmens (25) des Anbindungselementes (18) um die als verzahnungselementferne Schwenkachse (29) vorgesehene anbindungselementseitige Schwenkachse schwenkbar gelagert ist.

8. Antriebsvorrichtung nach Anspruch 6 oder Anspruch 7, **dadurch gekennzeichnet, dass** in dem Zwischenraum zwischen den Portalschenkeln (26, 27) des portalartigen Rahmens (25) des Anbindungselementes (18) ein Zugang (31) zu dem elastischen Verzahnungselement vorgesehen ist.

9. Antriebsvorrichtung nach einem der vorhergehenden Ansprüche, **dadurch gekennzeichnet, dass** das dem elastischen Verzahnungselement zugeordnete Anbindungselement (18) wenigstens teilweise als Blechteil, vorzugsweise als Blech-Biegeteil, ausgebildet ist.

10. Werkzeugmaschine zum Bearbeiten von Werkstücken, insbesondere von Blechen, mit einem Maschinengestell (2) sowie mit einer an dem Maschinengestell (2) mittels einer Antriebsvorrichtung (7) bewegbaren Bewegungseinheit (6), **dadurch gekennzeichnet, dass** als Antriebsvorrichtung (7) eine Antriebsvorrichtung (7) nach einem der vorhergehenden Ansprüche vorgesehen ist.

## Claims

1. Drive device for a movement unit (6) of a machine tool (1), which movement unit is moved on a machine frame (2) of the machine tool (1), having a toothed element which is driven by means of the drive motor (13) and which is in the form of a drive pinion (10) which is provided with a tooth arrangement (11), and having a toothed element in the form of a toothed rack (8) which is provided with a tooth arrangement (9), wherein
• from the two toothed elements, one toothed element is connected to the machine frame (2) and the other toothed element can be connected to the movement unit (6),
• the two toothed elements are moved relative to each other along a movement axis (15) by means of the drive motor (13) by the tooth arrangements (9, 11) of the two toothed elements meshing with each other and engaging one in the other along an engagement axis (12), which extends perpendicularly relative to the movement axis (15) of the toothed elements,
• the two toothed elements are resiliently supported one on the other parallel with the engagement axis (12) by at least one of the two toothed elements forming a resilient toothed element, which is supported by means of a bearing device (16) on a connection element (18), by means of which the resilient toothed element can be connected to the machine frame (2) or to the movement unit (6), in such a manner that the resilient toothed element, under the action of a redirection force (F_{D}) applied by the other toothed element to the resilient toothed element parallel with the engagement axis (12) and counter to the action of a restoring force which is directed counter to the redirection force (F_{D}), can be redirected relative to the connection element (18) parallel with the engagement axis (12),
• the action line of the redirection force (F_{D}) with respect to the bearing device (16) which is provided to support the resilient toothed element on the associated connection element (18) is offset perpendicularly relative to a plane which is defined by the movement axis (15) of the toothed elements and the engagement axis (12), and,
• for the resilient toothed element in addition to the bearing device (16), there is provided a torque compensator which counteracts a redirection rotation movement of the resilient toothed element carried out as a result of the redirection force (F_{D}) about a rotation axis which extends parallel with the movement axis (15) of the toothed element,
**characterised in that**
the torque compensator for the resilient toothed element has a redirection member (24) which
• at the side of the resilient toothed element is pivotably articulated about a pivot axis (30) at the side of the toothed element and at the side of the machine frame which is to be connected to the resilient toothed element or the movement unit which is to be connected to the resilient toothed element is pivotably articulated about a pivot axis (29) remote from the toothed element, the pivot axis (30) at the side of the toothed element and the pivot axis (29) remote from the toothed element extending parallel with the rotation axis of the resilient toothed element, and,
• as a result of an action of a redirection force (F_{D}) on the resilient toothed element, forces the resilient toothed element to carry out a reaction rotation movement which is directed counter to the redirection rotation movement of the resilient toothed element.

2. Drive device according to claim 1, **characterised in that** the redirection member (24) of the torque compensator for the resilient toothed element is provided between the resilient toothed element and the associated connection element (18) and **in that** a connection-element-side pivot axis is provided as the pivot axis (30) remote from the toothed element.

3. Drive device according to claim 2, **characterised in that** the resilient toothed element is suspended on the associated connection element (18) by means of the redirection member (24).

4. Drive device according to any one of the preceding claims, **characterised in that** the redirection member (24) is formed by a metal sheet, preferably a resilient metal sheet, which can be pivoted, on the one hand, about the pivot axis (30) at the side of the toothed element and, on the other hand, about the pivot axis (29) remote from the toothed element.

5. Drive device according to any one of the preceding claims, **characterised in that** the resilient toothed element is supported by means of a bearing device (16) in the form of a solid body articulation on the associated connection element (18) parallel with the engagement axis (12) so as to be able to be redirected counter to the action of a restoring force.

6. Drive device according to any one of the preceding claims, **characterised in that** the connection element (18) associated with the resilient toothed element has a portal-like frame (25) having two portal legs (26, 27) and a portal bridge (28) which connects the portal legs (26, 27) to each other and **in that** the redirection member (24) of the torque compensator for the resilient toothed element is arranged between the portal legs (26, 27) of the portal-like frame (25).

7. Drive device according to claim 6, **characterised in that** the redirection member (24) of the torque compensator for the resilient toothed element is supported at the connection element side on the portal bridge (28) of the portal-like frame (25) of the connection element (18) so as to be able to be pivoted about the connection-element-side pivot axis which is provided as the pivot axis (29) remote from the toothed element.

8. Drive device according to claim 6 or claim 7, **characterised in that** an access (31) to the resilient toothed element is provided in the intermediate space between the portal legs (26, 27) of the portal-like frame (25) of the connection element (18).

9. Drive device according to any one of the preceding claims, **characterised in that** the connection element (18) associated with the resilient toothed element is constructed at least partially as a sheet metal component, preferably as a bent sheet metal component.

10. Machine tool for processing workpieces, in particular metal sheets, having a machine frame (2) and having a movement unit (6) which can be moved on the machine frame (2) by means of a drive device (7), **characterised in that** a drive device (7) according to any one of the preceding claims is provided as the drive device (7).

## Revendications

1. Dispositif d'entraînement pour une unité mobile (6) d'une machine-outil (1) déplacée sur un bâti de machine (2) de la machine-outil (1), avec un élément d'engrenage sous la forme d'un pignon menant (10) entraîné par un moteur d'entraînement (13) et doté d'une denture (11), et avec un élément d'engrenage sous la forme d'une crémaillère (8) dotée d'une denture (9), sachant
- que parmi les deux éléments d'engrenage, l'un des éléments d'engrenage peut être relié au bâti de machine (2) et l'autre élément d'engrenage à l'unité mobile (6),
- que les deux éléments d'engrenage sont, au moyen du moteur d'entraînement (13), déplacés l'un par rapport à l'autre le long d'un axe de déplacement (15) par le fait que les dentures (9, 11) des deux éléments d'engrenage engrènent l'une avec l'autre et ce faisant s'engagent l'une dans l'autre le long d'un axe d'engagement (12) qui s'étend perpendiculairement à l'axe de déplacement (15) des éléments d'engrenage,
- que les deux éléments d'engrenage s'appuient élastiquement l'un contre l'autre parallèlement à l'axe d'engagement (12) par le fait qu'au moins un des deux éléments d'engrenage constitue un élément d'engrenage élastique qui, au moyen d'un dispositif formant palier (16), est supporté par un élément de liaison (18), par l'intermédiaire duquel l'élément d'engrenage élastique peut être relié au bâti de machine (2) ou à l'unité mobile (6), de telle sorte que l'élément d'engrenage élastique peut être dévié par rapport à l'élément de liaison (18) parallèlement à l'axe d'engagement (12) sous l'action d'une force de déviation (F_{D}) exercée par l'autre élément d'engrenage sur l'élément d'engrenage élastique parallèlement à l'axe d'engagement (12) et contre l'action d'une force de rappel opposée à la force de déviation (F_{D}),
- que la ligne d'action de la force de déviation (F_{D}) est, par rapport au dispositif formant palier (16) prévu pour le support de l'élément d'engrenage élastique sur l'élément de liaison associé (18), décalée perpendiculairement à un plan qui est défini par l'axe de déplacement (15) des éléments d'engrenage et par l'axe d'engagement (12),
- et qu'il est prévu pour l'élément d'engrenage élastique, en plus du dispositif formant palier (16), un compensateur de couple qui s'oppose à un mouvement de rotation de déviation, exécuté en raison de la force de déviation (F_{D}), de l'élément d'engrenage élastique autour d'un axe de rotation s'étendant parallèlement à l'axe de déplacement (15) des éléments d'engrenage, **caractérisé en ce que** le compensateur de couple pour l'élément d'engrenage élastique présente un bras articulé (24),
- qui est articulé à pivotement, du côté de l'élément d'engrenage élastique autour d'un axe de pivotement (30) situé du côté de l'élément d'engrenage, et du côté du bâti de machine à relier à l'élément d'engrenage élastique ou de l'unité de déplacement à relier à l'élément d'engrenage élastique autour d'un axe de pivotement (29) éloigné de l'élément d'engrenage, sachant que l'axe de pivotement (30) situé du côté de l'élément d'engrenage et l'axe de pivotement (29) éloigné de l'élément d'engrenage s'étendent parallèlement à l'axe de rotation de l'élément d'engrenage élastique,
- et qui, en raison d'une sollicitation de l'élément d'engrenage élastique avec une force de déviation (F_{D}), force l'élément d'engrenage élastique à exécuter un mouvement de rotation de réaction qui est opposée au mouvement de rotation de déviation de l'élément d'engrenage élastique.

2. Dispositif d'entraînement selon la revendication 1, **caractérisé en ce que** le bras articulé (24) du compensateur de couple pour l'élément d'engrenage élastique est prévu entre l'élément d'engrenage élastique et l'élément de liaison associé (18), et **en ce qu'**il est prévu comme axe de pivotement (29) éloigné de l'élément d'engrenage un axe de pivotement situé du côté de l'élément de liaison.

3. Dispositif d'entraînement selon la revendication 2, **caractérisé en ce que** l'élément d'engrenage élastique est suspendu à l'élément de liaison associé (18) par l'intermédiaire du bras articulé (24).

4. Dispositif d'entraînement selon l'une des revendications précédentes, **caractérisé en ce que** le bras articulé (24) est formé par une tôle, de préférence par une tôle élastique, qui peut pivoter d'une part autour de l'axe de pivotement (30) situé du côté de l'élément d'engrenage et d'autre part autour de l'axe de pivotement (29) éloigné de l'élément d'engrenage.

5. Dispositif d'entraînement selon l'une des revendications précédentes, **caractérisé en ce que** l'élément d'engrenage élastique est supporté par l'élément de liaison associé (18), avec possibilité de déviation parallèlement à l'axe d'engagement (12) à l'encontre de l'action d'une force de rappel, au moyen d'un dispositif formant palier (16) sous la forme d'une articulation monolithique.

6. Dispositif d'entraînement selon l'une des revendications précédentes, **caractérisé en ce que** l'élément de liaison (18) associé à l'élément d'engrenage élastique présente un cadre (25) du genre portique avec deux branches de portique (26, 27) et un pont de portique (28) reliant entre elles les branches de portique (26, 27), et **en ce que** le bras articulé (24) du compensateur de couple pour l'élément d'engrenage élastique est disposé entre les branches de portique (26, 27) du cadre (25) du genre portique.

7. Dispositif d'entraînement selon la revendication 6, **caractérisé en ce que** le bras articulé (24) du compensateur de couple pour l'élément d'engrenage élastique est supporté, du côté de l'élément de liaison, par le pont de portique (28) du cadre (25) du genre portique de l'élément de liaison (18) à pivotement autour de l'axe de pivotement situé du côté de l'élément de liaison qui est prévu comme axe de pivotement (29) éloigné de l'élément d'engrenage.

8. Dispositif d'entraînement selon la revendication 6 ou la revendication 7, **caractérisé en ce qu'**un accès (31) vers l'élément d'engrenage élastique est prévu dans l'espace entre les branches de portique (26, 27) du cadre (25) du genre portique de l'élément de liaison (18).

9. Dispositif d'entraînement selon l'une des revendications précédentes, **caractérisé en ce que** l'élément de liaison (18) associé à l'élément d'engrenage élastique est réalisé au moins en partie sous la forme d'une pièce de tôle, de préférence d'une pièce pliée en tôle.

10. Machine-outil pour l'usinage de pièces, en particulier de tôles, avec un bâti de machine (2) et avec une unité mobile (6) pouvant être déplacée sur le bâti de machine (2) au moyen d'un dispositif d'entraînement (7), **caractérisée en ce qu'**il est prévu comme dispositif d'entraînement (7) un dispositif d'entraînement (7) selon l'une des revendications précédentes.
